# EUROPEAN PATENT APPLICATION

(11) **EP 1 604 566 A1**
(43) Date of publication of application: **14.12.2005**
(21) Application number: 05104727.2
(22) Date of filing: 01.06.2005
(51) Int. Cl.: A01J 5/01

(54) **Non-invasive direct in-line milk meter**

(30) Priority: 11.06.2004 IT MI20041180
(71) Applicant: Interpuls S.P.A., 42020 Albinea RE (IT)
(72) Inventor: Nicolini, Gabriele, Dr. Ing., 42042 Fabbrico (RE) (IT); Sicuri, Roberto, Dr. Ing., 43100 Parma (IT); Rabbi, Renzo, Dr., 40053 Bazzano (BO) (IT)
(74) Representative: Giambrocono, Alfonso

(57) **Abstract**

The direct in-line milk meter is of the non-invasive type and comprises two electrodes (10, 12; 10A, 12A) which are incorporated (10A, 12A) into the wall of a pipe (22) carrying the milk from an animal during the milking process, or are (10, 12) applied to the outside of the wall of the pipe (22). The two electrodes (10, 12; 10A, 12A) form the plates of a capacitor, while the milk flowing through the pipe (22) between the plates (10, 12; 10A, 12A) acts as the capacitor's dielectric. There are provided means (14; 14A) for detecting changes in the capacitor's capacitance over time as the flow of milk in the pipe (22) varies, so that it is possible to determine the quantity of milk produced by the animal during milking. There are also provided means of ensuring that the flow of milk through the pipe (22) at the capacitor's plates (10, 12; 10A, 12A) is laminar and helicoidal, the pitch of the helix exceeding the length of that section of the pipe (22) covered by the plates (10, 12; 10A, 12A).

## Description

This invention concerns devices known as "milk meters", which allow automatic recording of the quantity of milk produced by each individual animal milked by means of a milking installation.

In dairy husbandry the availability of real-time production data enables the enterprise to be considerably better managed, in particular making it possible to follow the lactation curve of each animal precisely, so as to be in a position to promptly identify any falling-off in production.

The older method of determining the quantity of milk produced by an animal at each milking consisted of simply collecting the milk produced in a graduated vessel and reading off the corresponding volume of milk directly from the graduations. This required the presence of an operator to carry out this reading, with the risk of error either in the reading itself or in recording the value read. It should also be pointed out that a reading carried out in the way described above cannot by its nature be precise, since there is a fairly long-lived froth on the free surface of the milk in the graduated vessel, and this froth makes it hard to read the real level of the milk.

These drawbacks have been overcome using devices known as "milk meters", which are based on automatic counting of the number of times a measuring container of a given volume (which, when filled, defines what is known as the "volume unit") is filled with milk as it is being produced by a given animal at each milking. An alternative is to count weight units instead of volume units.

In existing volume-unit milk meters, as the measuring container becomes full this automatically opens an outlet valve which empties it. Suitable means automatically counts the number of times the measuring container fills/empties, the number of these cycles being equal the number of units of milk produced by the animal, so that the quantity of milk it produces at each milking can be calculated directly.

The use of these milk meters nevertheless has certain drawbacks. In particular, the cyclical interruption of the flow of milk during milking (to allow the measuring container to be emptied) means that measurement is discontinuous. Furthermore in such milk meters the milk is subjected to a mechanical action which impairs its quality.

In order to overcome the above drawbacks, so-called "direct in-line" milk meters have been brought onto the market in the last few years. In these the flow of milk from the milking unit is made to pass through the milk meter without any interruption to the flow of the milk throughout the milking (hence their name).

These milk meters have electrodes and/or other parts which stick out into, and/or surfaces which interfere with, the flow of milk from the milking unit through the meter; alternatively, they involve a division of the milk flow into more than one route. To distinguish the direct in-line milk meter to which the present invention refers (and which will be described below), we shall refer to such milk meters as "invasive", in the sense that they interfere with the flow of milk passing through them. This very characteristic of "invasiveness" means they diminish the milking unit's ability to throughput the milk, and in particular they slow down the milk's flow. Because the electrodes stick out into the flow of milk and/or because of the presence of surfaces more or less across the direction of flow, these milk meters have gaps, corners or portions of surface which are hard to wash clean. Fatty surface films form in these areas, which impair the quality of the milk coming into contact with these areas. Furthermore, if such films form on the electrodes or portions of them, the detecting sensitivity is thereby diminished and measurement errors produced as a result.

A direct in-line milk meter of the invasive type is described, for instance, in US-A-5 116 119 in which, though there are no electrodes which stick out into the milk flow, that flow is divided into a number of parallel channels, involving corners and surfaces on which such a fatty film can form.

One purpose, therefore, of the present invention is to create a "non-invasive" direct in-line milk meter, i.e. a milk meter which does not interfere with the flow of milk passing through it.

Before describing the essential characteristics of the milk meter constructed in accordance with the present invention, it may be recalled that, due to the way milking takes place, the flow of milk into the outlet pipe of the milking unit varies over time. The extent to which the port of a given cross-section of the outlet pipe will be filled will accordingly vary over time as well.

The purpose stated above is achieved by the milk meter constructed in accordance with the present invention, which comprises two electrodes and is characterised in that the two electrodes are incorporated into the wall of a pipe through which the milk from an animal during the milking process flows, or are applied to the outside of the wall of such a pipe, the two electrodes forming the plates of a capacitor, while the milk flowing through the pipe between these plates acts as the capacitor's dielectric; in that there are provided means for detecting, continuously or discontinuously, the changes in the capacitor's capacitance over time as the flow of milk in the pipe varies, so that it is possible to determine the quantity of milk produced by the animal during milking; and in that there are further provided means of ensuring that the flow of milk through the pipe is laminar and helicoidal at the capacitor's plates, the pitch of the helix exceeding the length of that section of the pipe covered by the plates.

It is already known that a capacitor's capacitance varies, *ceteris paribus,* depending on the dielectric, and in this particular case varies over time with the rate of flow of milk passing through the pipe. In particular it has been possible to establish that, if the flow of milk in a pipe is laminar and helicoidal and the pitch of the helix is greater than the length of pipe covered by the capacitor's plates, the capacitance of such a capacitor is directly proportional to the extent to which the cross-section of the pipe is filled - and therefore to the milk's rate of flow. As a result it is easy to derive, from an instantaneous reading of the capacitor's capacitance, the corresponding rate of flow of milk and hence the quantity of milk produced by a given animal.

The capacitor's plates can be supplied with either direct voltage or alternating voltage, or even with pulsed power. From trials which have been carried out, however, it has been concluded that it is better to use alternating voltage, since the capacitor then charges up more rapidly.

It is not necessary for the capacitor's capacitance to be measured continuously: this measurement may be made at regular intervals with interpolation of the corresponding values. Clearly, though, the greater the number of such readings the greater will be the precision obtained.

It is important to note that the capacitor's plates may also conveniently replace the electrodes of a known type of flow meter used in an automatic device for removing the milking unit, since it can fulfil both these functions simultaneously. As the person skilled the art know, the part of a milking installation inappropriately called the "flow meter" is a device which detects that milk is not flowing through a outlet pipe of a milking unit, whereupon this absence of milk, for a period exceeding a set time, automatically actuates the device for removing the milking unit.

A "flow meter" of this type is described in Italian Industrial Design Application MI2003A002696, and comprises:
- a body, of which one part is cup shaped, the body also comprising a milk inlet nozzle connected to the corresponding milking unit, and an outlet nozzle connected to the milk pipe, this outlet nozzle having two electrodes a set distance apart, each connected by its respective wire to the installation's control board;
- a cover designed to close off the body's cup part, this cover having a nipple which can be connected to the installation's vacuum source;
- a elastic membrane whose edge can be positioned, so as to form a seal, between the upper edge of the body's cup part and the cover, from the centre of which membrane a stalk extends downwards whose lower end is fitted with a blocking element designed to shut off the opening to the outlet nozzle, said membrane can take up either of just two stable configurations, in one of which the blocking element shuts off that opening and in the other of which the blocking element is raised so that it does not shut off the opening.

In one implementation of this flow meter, the inlet nozzle of the cup part of the flow meter body is offset from the plane passing through the cup part's axis, the latter being also the axis of the outlet nozzle, in order to prevent the incoming flow of milk from striking the blocking element and/or the its stalk, and also so as to generate a rotary flow in the cup part. Furthermore, the bottom of the cup part of the flow meter body is funnel-shaped. In the lower portion, at least, of the inside surface of the funnel-shaped bottom of the cup part there are helicoidal ridges sticking out.

Because of the above details, the flow of milk in the outlet nozzle of the flow meter is laminar and helicoidal. It is possible to design for the pitch of the helix described by the streamlets of milk to exceed the length of outlet nozzle covered by the capacitor's plates. If, therefore, the capacitor's plates are substituted for the electrodes which form part of the design of the flow meter just described, then the means of obtaining a laminar helicoidal flow of milk as described above are already present. If not, such means (for instance, helicoidal internal ridges) will have to be provided in the pipe at a suitable location upstream of the capacitor's plates.

The following description of one example of an implementation of the invention should make it easier to understand. This description will refer to the attached drawings, in which:
Fig. 1 is a cross-section of the capacitor plates of a milk meter constructed in accordance with the present invention, these plates being shaped as concentric arcs and enclosed in a suitable plastic material;
Fig. 2 is a view of this at the point marked by arrow 2 in Fig. 1;
Fig. 3 is a view of this at the point marked by arrow 3 in Fig. 1;
Fig. 4 is a view of a variant for the capacitor's plates according to the invention, where these plates are ring-shaped, of equal diameter, and positioned at some distance apart on a common axis.
Fig. 5 is a view of this, at the point marked by arrow 5 in Fig. 4;
Fig. 6 is a view of this, at the point marked by arrow 6 in Fig. 4;
Fig. 7 is a cross-section of a conventional "flow meter" whose electrodes have been replaced by the plates shown in Figs. 1-3, the flow meter being conventional in other respects.

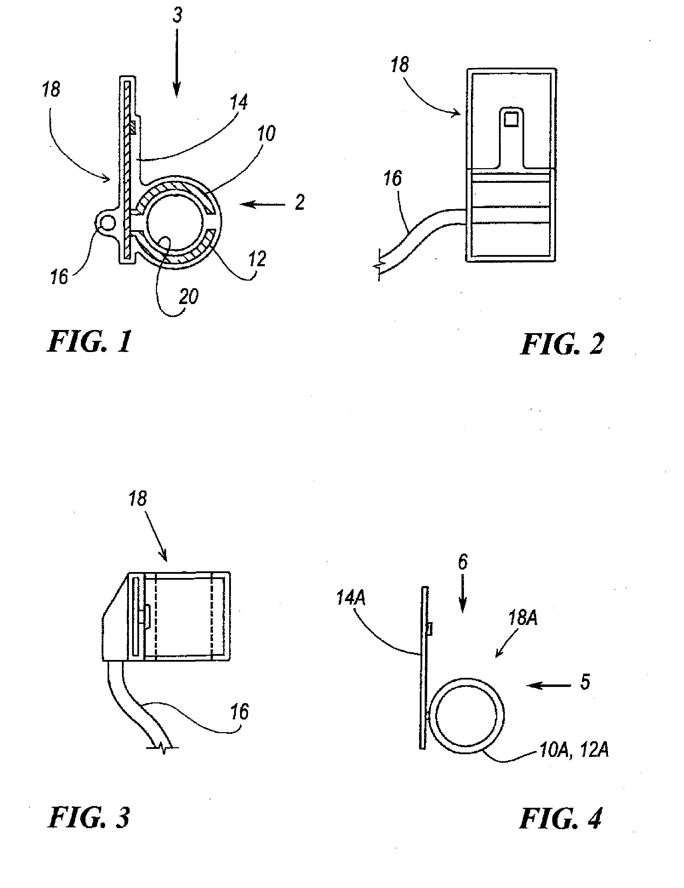

In Fig. 1, the plates of a capacitor are shown numbered 10 and 12: the two arc-shaped plates are concentric and subtend equal angles (a little less than 180°). Each of the plates 10 and 12 is supported by a small card or board 14 bearing a conventional electronic circuit (not shown here, for simplicity) which among other things provides for electrical connection of the two cores of an electric cable 16, each to its respective plate (10, 12).

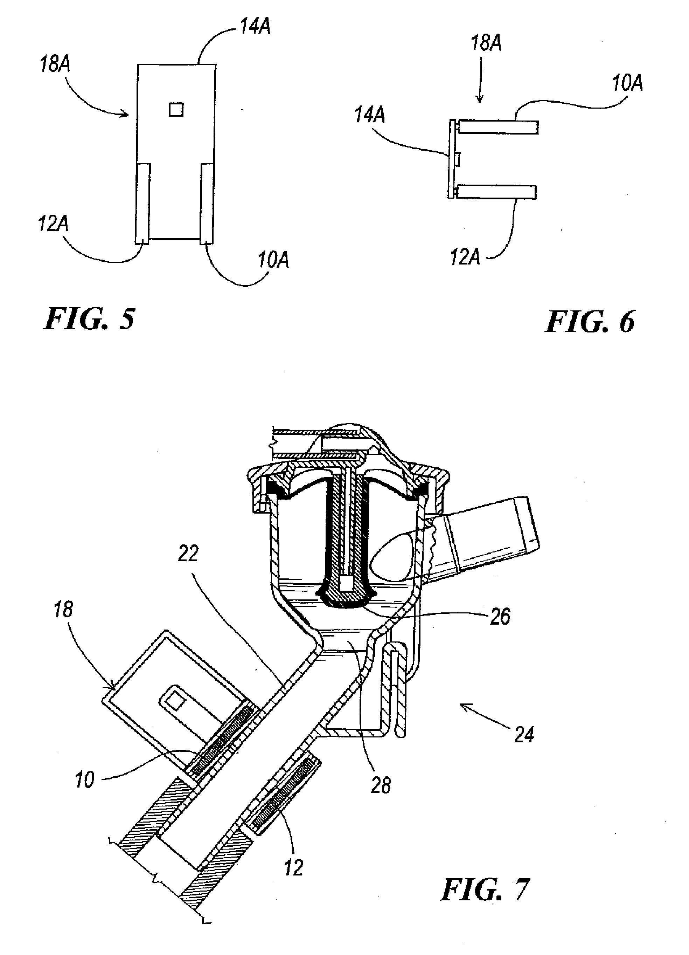

As will also be clear from Figs. 1-3, the plates 10, 12 and the circuit board 14, as well as the end part of the cable 16, are enclosed (for instance by means of injection over-molding) in a suitable electrically-insulating plastic material (ABS or TERLUX, for instance), so as to form a single unit, numbered 18. As can be seen from Fig. 1, this unit surrounds a cylindrical opening 20 inside the plates 10 and 12, into which can be inserted (see Fig. 7) the outlet pipe 22 of a flow meter 24 in which the conventional electrodes are replaced by the plates 10 and 12 of the unit 18. This particular flow meter 24 is of the type specified above and described in MI2003A002696, currently manufactured by the owner of the present invention.

In the case of Figs. 4-6, the plates 10A and 12A are ring-shaped, of equal size and positioned some distance apart on a common axis. As in the case of Figs. 1-3, plates 10A and 12A are supported by a board 14A with its electronic circuit (not shown, for simplicity) which provides for electrical connection of each of the two plates 10A and 12A with the end of its respective core of an electric cable (not shown here, for simplicity). The plates 10A, 12A and the circuit board 14 (forming one unit, numbered 18A), as well as the end part of the above electric cable, can be incorporated in a suitable electrically-insulating plastic material during the moulding of the outlet nozzle 22 of a flow meter as in Fig. 7, in such a way that the unit 18A forms a single unit with the tube 22 and hence in turn forms a single unit with the body of the flow meter 24. It is clear, though, that the unit 18A could also be separately enclosed in the above-mentioned plastic material, so producing an independent unit similar to that numbered 18 in Figs. 1-3, which could then be likewise fitted over the outlet nozzle 22 of the flow meter 24. Obviously, the plates 10, 12 and the board 14 of Figs. 1-3, with their corresponding end of the electric cable 16, could be incorporated, during the moulding of the corresponding body, in the same plastic material which forms the outlet nozzle 22 of the flow meter 24, so as to form a single unit. In any case, from the figures it is clear that, whatever solution is adopted, since the flow meter 24 is inserted in the discharge pipe for the milk, the milk passing through the nozzle 22, and therefore between the plates 10, 12 or 10A, 12A, acts as the dielectric of a capacitor of which those are the plates. As already mentioned, this capacitor can be of the type requiring a DC power supply, an AC power supply (preferably) or a pulsed power supply. Whatever the type of power supply, however, the capacitor's capacitance will vary over time as the flow of milk through nozzle 22 varies. As already stated, provided the flow of milk is laminar and helicoidal, (which has been found to be the case using the flow meter 24, as described above), and provided the pitch of the helix is greater than the length of that part of the nozzle 22 covered by the plates 10, 12 or 10A, 12A (which can be arranged), then the capacitor's capacitance will be a linear function of the milk's rate of flow. It is accordingly possible - by conventional electronic means, in this particular case by means of the electronic circuit on the board 14 or 14A - to measure the capacitor's capacitance, either continuously or at regular intervals (depending on the solution adopted, and the degree of precision desired), and to read out from the milking installation's control board, with considerable precision, the quantity of milk obtained from the milking of each animal.

It is possible, again through the milking installation's control board (which is able to register a value for the capacitor's capacitance corresponding to a nil throughput of milk), to interrupt the supply of vacuum to the milking unit once the absence of milk has exceeded a set time, by means of the valve in the flow meter 24. Fig. 7 shows the blocking element 26 of this valve, which is designed to close the port 28 of the flow meter 24. At this point, in accordance with known techniques, the milking unit is automatically detached from the animal's teats by the operation of an automatic removal mechanism (of the cylinder and piston type, for instance, where a piston, connected to the end of a cord, is made to move by the above-mentioned interruption of the vacuum; this pulls on the cord, whose other end is attached to the milking unit, thus pulling it off).

## Claims

1. Direct in-line milk meter for a milking installation, comprising two electrodes (10, 12; 10A, 12A), **characterised in that** the two electrodes are incorporated (10A, 12A) into the wall of a pipe (22) through which the milk from an animal during the milking process flows, or are (10, 12) applied to the outside of the wall of the pipe (22), the two electrodes forming the plates of a capacitor, while the milk flowing through the pipe between the plates (10, 12; 10A, 12A) acts as the capacitor's dielectric; **in that** there are also provided means (14) for detecting, continuously or discontinuously, the changes in the capacitor's capacitance over time as the flow of milk in the pipe varies, so that it is possible to determine the quantity of milk produced by the animal during milking; and **in that** there are further provided means of ensuring that the flow of milk through the pipe (22) is laminar and helicoidal at the capacitor's plates (10, 12; 10A, 12A), the pitch of the helix exceeding the length of that section of the pipe (22) covered by the plates (10, 12; 10A, 12A).

2. Direct in-line milk meter according to Claim 1, wherein the capacitor's plates (10, 12; 10A, 12A) are powered by alternating voltage.

3. Direct in-line milk meter according to Claim 1, wherein the capacitor's plates (10, 12; 10A, 12A) are supplied by regular pulses of power.

4. Direct in-line milk meter according Claim 1, wherein the capacitor's plates (10, 12; 10A, 12A) are powered by direct voltage.

5. Direct in-line milk meter according to Claim 2 or Claim 3, wherein the means for detecting the capacitor's capacitance does so at regular intervals.

6. Direct in-line milk meter according to Claim 1, wherein each of the capacitor's two plates (10, 12) is arc-shaped, the two arcs being centred on the axis of the pipe (22) carrying the milk, and subtending the same angle which is less than 180°.

7. Direct in-line milk meter according to Claim 1, wherein the two plates consist of two identical rings (10A, 12A) positioned some distance apart and around and coaxially with the pipe (22) carrying the milk.

8. Direct in-line milk meter according to Claim 6 or Claim 7, wherein the plates (10, 12; 10A, 12A) are supported by a board (14; 14A) bearing an electronic circuit which among other things provides for the connection of each plate (10, 12; 10A, 12A) with the end of its appropriate electrical core of a power supply cable (16) .

9. Direct in-line milk meter according to Claim 8, wherein the electronic circuit of the board (14; 14A) includes means for detecting the capacitor's capacitance.

10. Direct in-line milk meter according to Claim 8, wherein the plates (10, 12), the circuit board (14) and the corresponding end of the power supply cable (16) are enclosed together in a suitable electrically-insulating plastic material so as to form a single unit (18) with an opening (20) into which the pipe (22) carrying the milk can be inserted.

11. Direct in-line milk meter according to Claim 8, wherein the plates (10, 12), the circuit board (14) and the corresponding end of the power supply cable (16) are all enclosed in the same electrically insulating plastic material as that of which the pipe (22) carrying the milk is made, so as to make a single unit together with that pipe (22).

12. Direct in-line milk meter according to Claim 10 or Claim 11, wherein the pipe carrying the milk is the outlet nozzle (22) of a flow meter (24) of the type equipped with two electrodes which also act as the capacitor's plates (10, 12; 10A, 12A).

13. Direct in-line milk meter according Claim 12, wherein the flow meter (24) includes the means of ensuring that the flow of milk through its outlet nozzle (22) is laminar and helicoidal at the point where the capacitor's plates are located (10, 12; 10A, 12A), the pitch of the helix being greater than the length of that part of the nozzle (22) covered by the plates (10, 12; 10A, 12A).
